Europäisches Patentamt

European Patent Office

Office européen des brevets

(19)

(11) Numéro de publication : **0 198 733**
**B1**

(12) **FASCICULE DE BREVET EUROPÉEN**

(45) Date de publication du fascicule du brevet :
**11.10.89**

(51) Int. Cl.⁴ : **E 02 B 17/08**

(21) Numéro de dépôt : **86400496.5**

(22) Date de dépôt : **10.03.86**

(54) **Dispositif de suspension hydroélastique pour plates-formes mobiles de forage auto-élévatrices.**

(30) Priorité : **11.03.85 FR 8503529**

(43) Date de publication de la demande :
**22.10.86 Bulletin 86/43**

(45) Mention de la délivrance du brevet :
**11.10.89 Bulletin 89/41**

(84) Etats contractants désignés :
**DE NL SE**

(56) Documents cités :
**DE--A-- 2 412 628**
**FR--A-- 2 021 465**
**FR--A-- 2 203 768**
**US--A-- 2 705 118**

(73) Titulaire : **HUTCHINSON**
**2 rue Balzac**
**F-75008 Paris (FR)**

(72) Inventeur : **Korbuly, Gergely**
**30, Avenue Guy de Maupassant**
**F-78400 Chatou (FR)**
Inventeur : **Lecour, Pierre Alfred**
**59, Avenue C. Gide**
**F-94270 Le Kremlin Bicetre (FR)**

(74) Mandataire : **Orès, Bernard et al**
**Cabinet ORES 6, Avenue de Messine**
**F-75008 Paris (FR)**

## Description

La présente invention est relative à un dispositif de suspension pour plates-formes mobiles de forage auto-élévatrices.

On connaît différentes solutions apportées à la suspension d'une plate-forme auto-élévatrice.

Une première solution est représentée par un dispositif en élastomère à structure lamifiée, à savoir comportant un empilement de couches élastomère d'épaisseur appropriée alternées à des plaques métalliques, auxquelles elles sont adhérisées.

Cette structure lamifiée, qui est élastique et donc déformable, est destinée à coopérer avec un système réducteur de soulèvement et de descente des jambes (ou pieds) de la plate-forme auto-élévatrice, lequel système est du type à pignons et crémaillère et est contenu dans une enceinte flottante (plusieurs crémaillères sont solidaires d'une même jambe de la plate-forme).

Cette structure élastique lamifiée est remarquable en ce qu'elle supporte aussi bien les efforts axiaux et les efforts latéraux.

Une deuxième solution utilise un coussinet à paroi épaisse en élastomère renforcée par des fils d'acier à haute résistance à la traction, lequel coussinet délimite une chambre déformable destinée à être remplie d'un liquide sous pression, tel qu'une solution d'eau et de glycol pour l'emploi aux basses températures. Chaque coussinet de ce type est relié (indépendamment ou conjointement avec les autres coussinets associés à une même jambe de la plate-forme) à un accumulateur hydraulique pour améliorer la capacité d'absorption des chocs.

Un manomètre permet de contrôler la charge agissant sur les coussinets et qui est transmise à ces derniers par les jambes de la plate-forme, ce qui permet de surcroît, d'une part, de contrôler la répartition des charges supportées par les différentes jambes de la plate-forme et, d'autre part, de détecter et mesurer immédiatement une variation quelconque de la charge due, par exemple, l'enfoncement accidentel d'une jambe dans un fond marin peu résistant.

Chaque coussinet est en outre disposé entre deux plaques métalliques destinées à limiter sa déformation axiale, la déformation transversale ou latérale étant délimitée par des projections axiales faisant saillie de chaque plaque.

Le coussinet hydraulique déformable susdit peut être utilisé à la place de ladite structure élastique lamifiée ou en coopération avec cette dernière.

(On connaît également une troisième solution qui comporte l'emploi d'un système de bielles, mais qui sort du cadre de la présente invention).

Or, il y a lieu de remarquer, notamment en ce qui concerne le coussinet hydraulique déformable que, bien qu'il soit théoriquement destiné à remplacer ladite structure élastique lamifiée, en réalité la coopération entre ces deux dispositifs est, sur le plan pratique, impérative parce que le coussinet de suspension n'est pas adapté à supporter les efforts latéraux, tandis que la structure lamifiée en est capable.

En outre, il y a lieu de remarquer qu'en raison de la structure totalement déformable du coussinet de suspension, celui-ci n'est pas capable de supporter, à pression de liquide égale, la même charge lorsque — à cause d'un déséquilibrage de la plate-forme (comme il peut se vérifier, par exemple, dans le cas d'un enfoncement accidentel d'une ou plusieurs jambes de la plate-forme dans le fond marin) — le coussinet augmente de volume (dans le cas de l'exemple susdit, il s'agit des coussinets associés à la jambe ou aux jambes qui ne sont pas intéressés par l'enfoncement) : en fait, dans ce cas la surface de contact avec lesdites plaques qui limitent sa déformation axiale diminue et par voie de conséquence l'effort ou la charge qu'il peut supporter (la pression étant la même), en sorte que, pour supporter la même charge, il faudrait augmenter la pression en fonction de la déformation, ce qui est absolument impensable avec ce coussinet hydraulique.

La Demande de Brevet FR-A-2 021 465 décrit un amortisseur hydraulique comprenant en combinaison :

un boîtier avec une paroi latérale et un fond,

un organe central porteur de charge,

un ressort comprenant au moins un élément annulaire en caoutchouc, qui est fixé par sa surface interne à l'organe central porteur de charge et par sa surface externe au boîtier latéral,

une cavité étanche ménagée à l'intérieur du boîtier et remplie d'un liquide, cette cavité étant délimitée par le ressort, le fond et l'organe porteur de charge,

un dispositif de dissipation de l'énergie du liquide contenu dans cette cavité, par freinage de son écoulement sous l'effet de la déformation du ressort (due à la charge portée par l'organe central de l'amortisseur).

Toutefois, ce dispositif n'est pas destiné à agir comme suspension principale, mais essentiellement comme système dissipateur d'énergie par laminage d'un liquide, notamment pour réduire le roulis entre des caisses de wagons ferroviaires pour marchandises et leurs boggies.

La présente invention a par conséquent pour but de pourvoir à un dispositif de suspension pour plate-forme mobile de forage auto-élévatrice, destiné à supporter les charges transmises par les jambes de la plate-forme, qui répond mieux aux nécessités de la pratique que les dispositifs visant au même but antérieurement connus, notamment en ce que :

il admet, outre la déformation axiale, également des déformations latérales et angulaires,

il est adaptable aux différentes conditions de service, notamment de charge et déformation,

il permet aussi de limiter les surcharges, notamment dues aux chocs accidentels,

il ne nécessite aucun entretien ni aucune surveillance, et

sa conception est très simple.

La présente invention a pour objet un dispositif de suspension pour plate-forme mobile de forage auto-élévatrice, comprenant : — une chambre étanche déformable, notamment sous l'effet de la chargé supportée par les jambes de la plate-forme, ; un liquide remplissant ladite chambre ; — une paroi latérale déformable pour cette chambre, laquelle paroi latérale comporte au moins un élément élastique tubulaire, à axe sensiblement vertical, destiné à assurer la déformabilité de ladite chambre et étant réalisé notamment en élastomère, et — des moyens auxquels ledit élément élastique tubulaire est fixé et qui sont destinés au guidage en translation et en rotation de sa déformation axiale et/ou latérale et/ou angulaire, respectivement, sous l'effet de ladite charge ainsi que d'éventuels chocs accidentels, lequel dispositif est caractérisé en ce que le liquide remplissant la chambre déformable est sous pression, et en ce qu'il comporte en outre un moyen de butée destiné à limiter la déformation axiale de l'élément élastique tubulaire, ce moyen de butée étant constitué par une structure élastomère lamifiée déformable, constituée par un empilement de couches élastomères d'épaisseur appropriée alternées à des plaques métalliques auxquelles elles sont adhérisées, laquelle structure lamifiée est logée à l'intérieur de ladite chambre déformable et fixée à la base inférieure de cette dernière.

Selon un mode de réalisation avantageux du dispositif conforme à l'invention, la plaque métallique supérieure de ladite structure déformable lamifiée comporte des nervures, notamment sous forme de couronnes concentriques, destinées à venir en butée contre ladite base supérieure de la chambre déformable et à limiter ainsi la déformation axiale maximale admise, nervures dans lesquelles sont ménagés des orifices de communication entre le volume de ladite chambre qui est compris à l'intérieur de ces nervures et le volume situé à l'extérieur de ces dernières.

Selon un autre mode de réalisation avantageux du dispositif conforme à l'invention, lesdits moyens de guidage de la déformation dudit élément élastique tubulaire sont constitués par deux armatures métalliques tubulaires coaxiales adhérisées à cet élément élastique qui les sépare une armature étant disposée à l'intérieur, tandis que l'autre armature est disposée à l'extérieur, les deux armatures étant solidarisées à deux plaques métalliques sensiblement horizontales, dont l'une constitue une base d'appui inférieure, tandis que l'autre constitue une base d'appui supérieure et qui sont destinées, d'une part, à transmettre lesdites charges et lesdits chocs accidentels aux armatures de guidage de la déformation et, d'autre part, à délimiter ladite chambre étanche en coopération avec ces armatures et ledit élément élastique.

Selon une disposition préférée de ce mode de réalisation, l'armature de guidage interne est solidaire de la base supérieure, tandis que l'armature de guidage externe est solidaire de la base inférieure.

Selon une modalité avantageuse de cette disposition, l'armature de guidage externe est solidarisée à la base inférieure par l'intermédiaire d'une collerette annulaire, qui est fixée, notamment par soudage, à l'extrémité inférieure de cette armature externe suivant le pourtour de l'ouverture centrale de cette collerette annulaire et qui est destinée à constituer un appui pour des ailettes métalliques de renforcement de ladite armature externe, la collerette étant solidarisée à la base inférieure par tous moyens appropriés, notamment par boulonnage.

Outre les dispositions qui précèdent, l'invention comprend encore d'autres dispositions, qui ressortiront de la description qui va suivre.

L'invention sera mieux comprise à l'aide du complément de description qui va suivre, qui se réfère aux dessins annexés dans lesquels :

la figure 1 représente une vue en élévation latérale du dispositif selon l'invention ;

la figure 2 représente deux demi-vues de dessus relatives à deux configurations possibles pour le dispositif de figure 1 ;

la figure 3 représente une demi-coupe verticale, suivant le plan III de figure 2, du dispositif de suspension hydroélastique conforme à l'invention ;

la figure 4 représente deux courbes caractéristiques effort/déformation axiale pour le dispositif selon l'invention, dans le cas où il est dépourvu de liquide sous pression et dans le cas où il est rempli de ce liquide sous pression, respectivement.

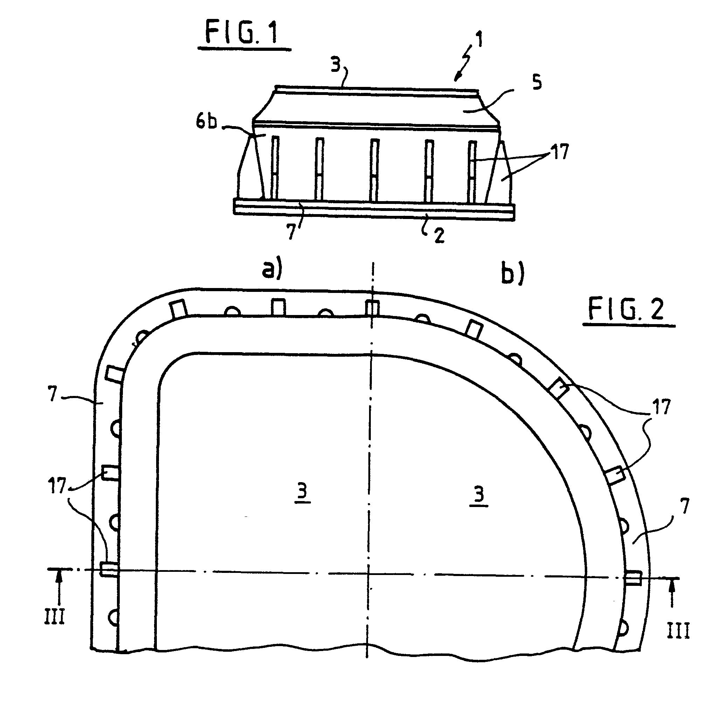

La figure 1 montre une vue d'ensemble d'un dispositif de suspension hydroélastique conforme à la présente invention, qui est destiné à assurer une liaison déformable entre le pont et les jambes d'une plate-forme mobile de forage auto-élévatrice (non représentée).

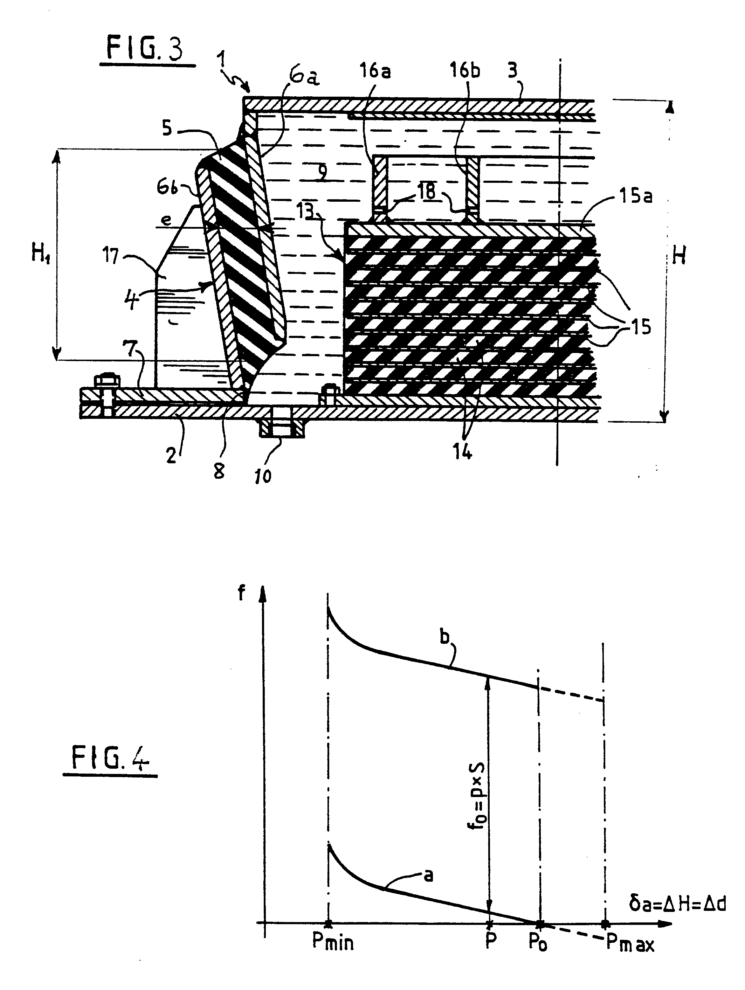

Il s'agit essentiellement d'une chambre étanche déformable 1 qui comprend (cf. la figure 3) :

une base inférieure 2 destinée à venir en appui sur l'enceinte flottante (non représentée) d'un système réducteur à pignons et crémaillère, la crémaillère étant solidaire d'une jambe de la plate-forme auto-élévatrice,

une base supérieure 3 destinée à venir en appui contre le pont de la plate-forme (la transmission des efforts supportés par chaque jambe de la plate-forme se faisant à travers ces bases d'appui 2 et 3) et

une paroi latérale déformable 4 à structure composite, qui est constituée par :

un élément élastomère tubulaire 5, de préférence en forme de couronne tronconique, à axe vertical, qui est adhérisé à

deux armatures métalliques tubulaires coaxiales 6a et 6b, l'une interne et l'autre externe, respectivement.

L'armature interne 6a est solidarisée, notamment par soudage, à ladite base supérieure 3, tandis que l'armature externe 6b est solidarisée, notamment également par soudage, à ladite base inférieure 2 par l'intermédiaire d'une collerette annulaire 7 soudée à l'extrémité inférieure de l'armature 6b suivant le pourtour de son orifice central 8 et faisant saillie vers l'extérieur parallèlement à la base 2, à laquelle elle est fixée par tous moyens appropriés, notamment par boulonnage. (Bien sûr, cette connexion entre les deux armatures et les deux bases peut être inversée, le cas échéant).

L'armature externe 6b est pourvue d'ailettes de renforcement 17 (cf. la figure 1) qui prennent appui sur la collerette de fixation 7.

Un liquide 9 approprié, notamment constitué par une solution eau/glycol, sous pression, est introduit dans la chambre 1 par l'intermédiaire de l'orifice 10 ménagé dans la base inférieure 2 (il va de soi que, en l'occurrence, on pourrait ménager cet orifice d'admission du liquide dans la base supérieure 3).

L'anneau élastomère tubulaire 5, qui est adhérisé aux deux armatures 6a et 6b, assure les fonctions suivantes :

d'une part, l'étanchéité de la chambre 1, et

d'autre part, une liaison élastique souple entre les bases d'appui 2 et 3, qui fonctionne comme le ressort de rappel d'un vérin hydraulique, tandis que les deux armatures 6a et 6b assurent le guidage en translation de l'élément élastique tubulaire 5 lors de la déformation axiale et/ou latérale de la chambre 1, de même que le guidage en rotation lors d'une éventuelle déformation angulaire de cette chambre 1, sous l'effet desdites charges ou de chocs accidentels.

Il va de soi que la section horizontale de la chambre déformable 1 peut être a priori quelconque, le choix entre les configurations circulaire ou rectangulaire (carrée) étant fonction de l'espace réellement disponible (cf. les figures 2a et 2b), dans ces deux cas l'élément élastomère dont se compose la paroi latérale déformable de ladite chambre déformable étant constitué par une couronne tronconique ou une couronne de tronc de pyramide, respectivement.

La chambre déformable 1 comporte un moyen de butée destiné à limiter en particulier la déformation axiale (qui est la plus importante) de l'élément élastomère tubulaire 5.

Ce moyen de butée est constitué par une structure lamifiée 13 (figure 3), du type décrit plus haut, à savoir constitué par un empilement de couches élastomères 14 d'épaisseur appropriée adhérisées à des plaques métalliques 15, qui est logée à l'intérieur de la chambre 1 et qui est fixée à la base inférieure 2 de cette dernière, notamment par boulonnage ou autre.

De façon préférentielle, la plaque métallique supérieure 15a de cette structure déformable lamifiée 13, comporte des nervures, sous forme de couronnes 16a, 16b concentriques et de hauteur appropriée, qui sont destinées à limiter davantage la déformation axiale de la chambre 1 : de cette manière, on peut utiliser, pour une déformation axiale maximale donnée, une structure lamifiée de hauteur moindre avec une économie sensible de matériel, tout en disposant d'un volume minimal permettant un fonctionnement correct lorsqu'il est rempli du liquide sous pression 9.

Il est avantageux de ménager dans la paroi desdites couronnes 16a et 16b des orifices 18 de communication entre le volume compris à l'intérieur de ces couronnes et le volume situé à l'extérieur de ces dernières.

La solution consistant à loger ladite structure lamifiée 13 à l'intérieur du dispositif de suspension conforme à la présente invention présente — notamment par rapport à la solution de l'Art antérieur qui associe également cette structure à un autre dispositif de suspension mais en la disposant à l'extérieur de ce dernier — l'avantage supplémentaire d'une économie d'espace.

La figure 4 montre l'allure de la courbe $(f,\delta a)$ effort/déformation axiale pour le dispositif de suspension conforme à la présente invention.

La courbe a se réfère au cas où la chambre déformable 1 ne contient pas de liquide, tandis que la courbe b se réfère au cas où un liquide 9 sous pression, du type susdit, est introduit dans cette chambre à travers l'orifice 10.

On observe que la courbe a est quasi linéaire dans la plage admise pour la déformation axiale $\delta a$, qui correspond à la variation $\Delta H = H - H'$ de la dimension axiale de la chambre 1 : H est la hauteur de cette chambre en position de repos $P_0$ (cf. la figure 3a), tandis que H' est la hauteur de cette même chambre en condition de travail P correspondant à une position intermédiaire.

On remarque que, dans l'hypothèse où on introduit dans la chambre 1 un fluide sous pression constante p, la courbe b est obtenue par une translation effectuée parallèlement à l'axe des ordonnées (efforts f) et définie, en grandeur, par le produit entre ladite pression constante p et la surface S de la base supérieure 3 : en fait, en correspondance de la position de repos $P_0$, le dispositif de suspension conforme à l'invention est capable de supporter un effort

$$f_0 = p \times S,$$

sans subir aucune déformation axiale, parce que la charge est exactement compensée par la poussée verticale due à la pression du fluide.

Bien que l'élément élastique en élastomère 5 travaille principalement en compression, il admet cependant une certaine déformation (ou course) en traction, ce qui est indiqué par un prolongement des courbes a et b en trait discontinu (bien évidemment il s'agit là d'une zone correspondant à un fonctionnement tout à fait exceptionnel : le point $P_{max}$ sur le diagramme de figure 5 correspond à la position pour laquelle la chambre déformable 1 présente une hauteur maximale).

Il est relativement facile d'adapter le dispositif de suspension selon l'invention aux différentes conditions de service, à savoir à la charge effective et à la course admise, en tenant compte que :

pour faire supporter au dispositif une charge plus importante, il suffit :

d'augmenter la surface S de la base supérieure 3 (et donc de la base inférieure 2) en laissant inchangées l'épaisseur e et la hauteur $H_1$ de l'élément élastomère 5, ou

d'augmenter la hauteur $H_1$ de cet élément élastomère, en laissant inchangées son épaisseur et ladite surface S, dans ces deux cas, la déformation ou course de l'élément élastomère restant inchangée, tandis que

pour augmenter la déformation admise, il suffit d'augmenter l'épaisseur e de l'élément élastomère en laissant inchangées sa hauteur $H_1$ et ladite section S, mais dans ce cas la charge admise diminue.

Il est intéressant de souligner que le dispositif de suspension hydroélastique conforme à l'invention présente des avantages certains par rapport à l'emploi (théoriquement possible) d'un vérin hydraulique, notamment en ce que :

on élimine l'inconvénient dû au frottement de la tige coulissante d'un tel vérin contre son joint d'étanchéité, lequel frottement fait disparaître à terme, par usure de ce joint, l'étanchéité nécessaire, ce qui demanderait de prévoir une surveillance continue et une maintenance qui auraient inévitablement une incidence sensible sur le coût final d'une installation de suspension réalisée à l'aide de vérins hydrauliques, tandis que le dispositif selon l'invention ne demande aucun entretien, et

on n'a pas besoin de prévoir des systèmes de fixation complexes tels que rotules, glissières, etc... qui seraient nécessaires pour permettre à un vérin hydraulique classique d'effectuer, outre les déplacements axiaux normaux, des déplacements latéraux et/ou angulaires, étant donné qu'un tel vérin n'admet normalement aucun de ces déplacements.

Il y a encore lieu de noter que la paroi latérale déformable en élastomère de la chambre étanche 1 permet de limiter l'effet des surcharges dues aux chocs en raison de son élasticité qui la rend capable d'encaisser, en partie au moins, les variations de volume de cette chambre 1 en cas de chocs accidentels.

En outre, il va de soi que bien que la forme préférée dudit élément élastomère tubulaire est celle d'une couronne tronconique, cette couronne peut être aussi cylindrique.

En ce qui concerne la mise en place d'une plate-forme mobile de forage auto-élévatrice (qui est flottante), celle-ci descend — de façon classique — ses jambes qui prennent appui sur le fond marin, puis elle s'élève au-dessus de l'eau en prenant appui sur ces mêmes jambes.

Etant donné que, au cours de cette opération de mise en place, le pont de la plate-forme est soumis à l'action de la mer, il y a des variations de niveau qui sont reprises avantageusement — et ce encore de façon classique — en reliant les dispositifs de suspension hydroélastiques conformes à l'invention à un accumulateur hydropneumatique mais avec une différence remarquable par rapport aux dispositifs de suspension de l'Art antérieur qui est représentée par une variation de la charge très faible sur les jambes due à l'allure de la courbe effort/déformation axiale du dispositif selon l'invention.

Il va de soi que, pour exploiter au mieux les capacités de déformation axiale du dispositif de suspension hydroélastique conforme à l'invention, on aura intérêt à augmenter progressivement la pression du liquide à l'intérieur de sa chambre déformable pendant l'opération de mise en place de la plate-forme sans avoir à craindre les problèmes signalés plus haut au sujet des coussinets hydrauliques de l'Art antérieur.

Une fois la plate-forme installée, il est possible de réaliser la mise à niveau de la plate-forme en faisant varier le volume du fluide dans la chambre des suspensions hydroélastiques installées sur les différentes jambes; et ce sans activation du système réducteur à pignons et crémaillère.

Un simple manomètre permet de contrôler la charge agissant sur chaque jambe : il est donc possible de contrôler la répartition des charges sur chacune des suspensions. Il est possible, en outre, de détecter une variation de charge (due, par exemple, à l'enfoncement d'une jambe dans un fond marin peu résistant, qui risque de provoquer jusqu'à une perte de stabilité.

De plus, si on ne prévoit pas de système de blocage (connu en soi) entre les pieds et le pont de la plate-forme, on aura intérêt à ajuster le volume du fluide sous pression de manière à se situer à mi-chemin entre la hauteur minimale de la chambre déformable et la hauteur de cette dernière au repos, et ce sous la charge statique de la plate-forme installée.

## Revendications

1. Dispositif de suspension pour plate-forme mobile de forage auto-élévatrice, comprenant : — une chambre étanche déformable (1) sous l'effet de la charge supportée par les jambes de la plate-forme ; — un liquide (9) remplissant ladite chambre ; — une paroi latérale déformable (4) pour cette chambre, laquelle paroi latérale comporte au moins un élément élastique tubulaire (5), à axe sensiblement vertical, destiné à assurer la déformabilité de ladite chambre et étant réalisé notamment en élastomère, et — des moyens (6a, 6b) auxquels ledit élément élastique tubulaire est fixé et qui sont destinés au guidage en translation et en rotation de sa déformation axiale et/ou latérale et/ou angulaire, respectivement, sous l'effet de ladite charge ainsi que d'éventuels chocs accidentels, lequel dispositif est caractérisé en ce que le liquide remplissant la chambre déformable est sous pression, et en ce qu'il comporte en outre un moyen de butée destiné à limiter la déformation axiale de l'élément élastique tubulaire, ce moyen de butée étant constitué par une structure élastomère lamifiée déformable (13), constituée par un empilement de couches élastomères (14) d'épaisseur appropriée alternées à des plaques métalliques (15, 15a) auxquelles elles sont adhérisées, laquelle structure lamifiée (13) est logée à l'intérieur de ladite chambre déformable (1) et fixée à la base inférieure de cette dernière.

2. Dispositif selon la revendication 1, caractérisé en ce que la plaque métallique supérieure (15a) de ladite structure déformable lamifiée (13) comporte des nervures, notamment sous forme de couronnes concentriques (16a, 16b), destinées à venir en butée contre ladite base supérieure (3) de la chambre déformable (1) et à limiter ainsi la déformation axiale maximale admise, nervures dans lesquelles sont ménagés des orifices (18) de communication entre le volume de ladite chambre (1) qui est compris à l'intérieur de ces nervures et le volume situé à l'extérieur de ces dernières.

3. Dispositif selon l'une quelconque des revendications 1 ou 2, caractérisé en ce que lesdits moyens de guidage de la déformation dudit élément élastique tubulaire (5) sont constitués par deux armatures métalliques tubulaires coaxiales (6a, 6b) adhérisées à cet élément élastique (5) qui les sépare, une armature (6a) étant disposée à l'intérieur, tandis que l'autre armature (6b) est disposée à l'extérieur, les deux armatures (6a, 6b) étant solidarisées à deux plaques métalliques (2, 3) sensiblement horizontales, dont l'une constitue une base d'appui inférieure (2), tandis que l'autre constitue une base d'appui supérieure (3) et qui sont destinées, d'une part à transmettre lesdites charges et lesdits chocs accidentels aux armatures (6a, 6b) de guidage de la déformation et, d'autre part, à délimiter ladite chambre étanche (1) en coopération avec ces armatures et ledit élément élastique (5).

4. Dispositif selon la revendication 3, caractérisé en ce que l'armature de guidage interne (6a) est solidaire de la base supérieure (3), tandis que l'armature de guidage externe (6b) est solidaire de la base inférieure (2).

5. Dispositif selon la revendication 4, caractérisé en ce que l'armature de guidage extérieure (6b) est solidarisée à la base inférieure (2) par l'intermédiaire d'une collerette annulaire (7), qui est fixée, notamment par soudage, à l'extrémité inférieure de cette armature extérieure (6b) suivant le pourtour de l'ouverture centrale (8) de cette collerette annulaire (7) et qui est destinée à constituer un appui pour des ailettes métalliques (17) de renforcement de ladite armature externe (6b), la collerette (7) étant solidarisée à la base inférieure (2) par tous moyens appropriés, notamment par boulonnage.

## Claims

1. Suspension device for self-lifting mobile drilling platform, comprising : — a sealed chamber (1) deformable under the effect of the load supported by the legs of the platform ; — a liquid (9) filling said chamber ; — a deformable side wall (4) for this chamber, which side wall comprises at least one elastic tubular element (5), with substantially vertical axis, for ensuring the deformability of said chamber and being made from elastomer, and — means (6a, 6b) to which said elastic tubular element is fixed and which are intended for guiding its axial and/or lateral and/or angular deformation in translation and rotation, respectively under the effect of said load as well as possible accidental shocks, which device is characterized in that the liquid filling the deformable chamber is pressurized, and in that it further comprises a stop means for limiting the axial deformation of the elastic tubular element, this stop means being formed by a deformable stratified elastomer structure (13) formed by a stack of elastomer layers (14) of appropriate thickness alternated with metal plates (15, 15a) to which they are adhered, which stratified structure (13) is housed inside said deformable chamber (1) and fixed to the lower base thereof.

2. Device according to claim 1, characterized in that the upper metal plate (15a) of said stratified deformable structure (13) comprises ribs, particularly in the form of concentric rings (16a, 16b) intended to come into abutment against said upper base (3) of the deformable chamber (1) and thus limit the maximum admitted axial deformation, in which ribs are formed orifices (18) for communication between the volume of said chamber (1) which is included inside these ribs and the volume situated outside thereof.

3. Device according to any one of claims 1 or 2, characterized in that · said means guiding the deformation of said elastic tubular element (5) are formed by two coaxial tubular metal frames (6a, 6b) adhered to this elastic tubular element (5) which separates them, one frame (6a) being disposed inside whereas the other frame (6b) is disposed outside, the two frames (6a, 6b) being secured to two substantially horizontal metal plates (2, 3), one of which forms a lower bearing base (2), whereas the other forms an upper bearing base (3) and which are intended, on the one hand, to transmit said loads and said accidental shocks to the frames (6a, 6b) guiding the deformation and, on the other hand, to define said sealed chamber (1) in cooperation with these frames and said elastic element (5).

4. Device according to claim 3, characterized in that the internal guide frame (6a) is fast with the upper base (3) whereas the external guide frame (6b) is fast with the lower base (2).

5. Device according to claim 4, characterized in that the external guide frame (6b) is secured to the lower base (2) by means of an annular collar (7) which is fixed, more particularly by welding, to the lower end of this external frame (6b) along the periphery of the central opening (8) of this annular collar (7) and which is intended to form a support for metal fins (17) reinforcing said external frame (6b), the collar (7) being secured to the lower base (2) by any appropriate means, particularly by bolting.

## Patentansprüche

1. Aufhängevorrichtung für eine selbsthebende mobile Bohrplattform, umfassend : — eine dichte Kammer (1), die unter der Wirkung der von den Beinen der Plattform getragenen Last deformierbar ist; — eine Flüssigkeit (9), welche diese Kammer füllt; — eine deformierbare seitliche Wand (4) für diese Kammer, welche seitliche Wand wenigstens ein rohrförmiges elastisches Element (5) mit im wesentlichen vertikaler Achse umfaßt, das dazu bestimmt ist, die Deformierbarkeit dieser Kammer sicherzustellen und insbesondere aus Elastomer ausgebildet ist, und — Mittel (6a, 6b), an denen das rohrförmige elastische Element befestigt ist und die zur Translations- und Rotationsführung seiner jeweiligen axialen und/oder lateralen und/oder winkelmäßigen Deformation unter der Wirkung der Last wie auch eventueller zufälliger Stöße bestimmt sind, wobei diese Vorrichtung dadurch gekennzeichnet ist, daß die Flüssigkeit, welche die deformierbare Kammer füllt, unter Druck ist, und daß sie außerdem ein Anschlagmittel hat, das dazu bestimmt ist, die axiale Deformation des elastischen rohrförmigen Elements zu begrenzen, wobei dieses Anschlagmittel von einer deformieren laminierten Elastomerstruktur (13) gebildet ist, die von einem Stapel von Elastomerschichten (14) geeigneter Dicke, abwechselnd mit metallischen Platten (15, 15a), an denen sie angeklebt sind, gebildet ist, welche laminierte Struktur (13) im Inneren der deformierbaren Kammer (1) untergebracht und an der unteren Basis dieser letzteren befestigt ist.

2. Vorrichtung nach Anspruch 1, dadurch gekennzeichnet, daß die obere metallische Platte (15a) der deformierbaren laminierten Struktur (13) Rippen, insbesondere in der Form von konzentrischen Ringen (16a, 16b) hat, die dazu bestimmt sind, in Anschlag gegen die obere Basis (3) der deformierbaren Kammer (1) zu kommen und auf diese Weise die maximal zulässige axiale Deformation zu begrenzen, wobei in den Rippen Öffnungen (18) für die Verbindung zwischen dem Volumen dieser Kammer (1), das in dem Inneren dieser Rippen enthalten ist, und dem Volumen, das sich im Äußeren dieser letzteren befindet, angebracht sind.

3. Vorrichtung nach irgendeinem der Ansprüche 1 oder 2, dadurch gekennzeichnet, daß die Mittel für die Führung der Deformation des rohrförmigen elastischen Elements (5) von zwei koaxialen rohrförmigen metallischen Armaturen (6a, 6b) gebildet sind, die an diesem elastischen Element (5) angeklebt sind, welches sie trennt, wobei eine Armatur (6a) im Inneren angeordnet ist, während die andere Armatur (6b) im Äußeren angeordnet ist, wobei die beiden Armaturen (6a, 6b) fest mit zwei im wesentlichen horizontalen metallischen Platten (2, 3) verbunden sind, von denen die eine eine untere Auflagerbasis (2) bildet, während die andere eine obere Auflagerbasis (3) bildet, und welche dazu bestimmt sind, einerseits die Lasten und zufälligen Stöße auf die Armaturen (6a, 6b) für die Führung der Deformation zu übertragen und andererseits die dichte Kammer (1) im Zusammenwirken mit diesen Armaturen und dem elastischen Element (5) zu begrenzen.

4. Vorrichtung nach Anspruch 3, dadurch gekennzeichnet, daß die innere Armatur (6a) für die Führung fest mit der oberen Basis (3) verbunden ist, während die äußere Armatur (6b) für die Führung fest mit der unteren Basis (2) verbunden ist.

5. Vorrichtung nach Anspruch 4, dadurch gekennzeichnet, daß die äußere Armatur (6b) für die Führung mit der unteren Basis (2) mittels eines ringförmigen Flansches (7) fest verbunden ist, welcher, insbesondere durch Verschweißen, am unteren Ende dieser äußeren Armatur (6b) entlang dem Umfang der mittigen Öffnung (8) dieses ringförmigen Flansches (7) befestigt ist und welcher dazu bestimmt ist, ein Auflager für metallische Flügel (17) für die Verstärkung der äußeren Armatur (6b) zu bilden, wobei der Flansch (7) durch jedes geeignete Mittel, insbesondere durch eine Schraubenverbindung, fest mit der unteren Basis (2) verbunden ist.

## FIG. 1

## FIG. 2

a)  b)

## FIG. 3

## FIG. 4

$$f_0 = p \times S$$

$$\delta a = \Delta H = \Delta d$$